# EUROPÄISCHE PATENTANMELDUNG

(11) **EP 2 824 427 A1**
(43) Veröffentlichungstag der Anmeldung: **14.01.2015**
(21) Anmeldenummer: 14176012.4
(22) Anmeldetag: 07.07.2014
(51) Int. Cl.: G01F 1/00, G01F 1/66, G01F 9/00, G01F 23/284

(54) **Bestimmung einer Distanz und einer Fließgeschwindigkeit eines Mediums**

(30) Priorität: 08.07.2013 DE 102013213340
(71) Anmelder: VEGA Grieshaber KG, 77709 Wolfach (DE)
(72) Erfinder: Fehrenbach, Josef, 77716 Haslach (DE); Motzer, Jürgen, 77723 Gengenbach (DE); Schultheiss, Daniel, 78132 Hornberg (DE)
(74) Vertreter: Maiwald Patentanwalts GmbH

(57) **Zusammenfassung**

Es ist ein Füllstandmessgerät zur Bestimmung von Distanz und Fließgeschwindigkeit eines Mediums angegeben, welches ein frequenzmoduliertes Sendesignal mit einer steigenden und einer fallenden Frequenzrampe aufweist. Durch den durch die Fließgeschwindigkeit des Mediums auftretenden Dopplereffekt kann die Fließgeschwindigkeit des Mediums bestimmt werden.

## Beschreibung

### Gebiet der Erfindung

Die Erfindung betrifft die Bestimmung von der Distanz zwischen einem Fluid (Medium) und einem Sensor sowie die Bestimmung der Fließgeschwindigkeit des Mediums. Insbesondere betrifft die Erfindung ein Messgerät zur Bestimmung einer Distanz zu einem Medium sowie einer Fließgeschwindigkeit des Mediums durch Auswertung eines von dem Messgerät abgestrahlten und von dem Medium reflektierten frequenzmodulierten Sendesignals. Darüber hinaus betrifft die Erfindung ein Verfahren zur Bestimmung einer Distanz zu einem Medium sowie einer Fließgeschwindigkeit des Mediums, ein Programmelement und ein computerlesbares Medium.

### Hintergrund

Es sind Messgeräte zur Bestimmung der Distanz des Sensors zu einem Medium sowie dessen Fließgeschwindigkeit bekannt, die aus zwei verschiedenen Messsystemen zur Ermittlung der Distanz (Messsystem 1) und der Fließgeschwindigkeit (Messsystem 2) bestehen. Diese Messgeräte können zur Pegelmessung eines fließenden Gewässers eingesetzt werden.

Die Distanz wird über ein Pulsradar ermittelt, die Bestimmung der Fließgeschwindigkeit hingegen erfolgt durch Dopplerauswertung eines konstanten Sendesignals, bei dem es sich beispielsweise um ein Continuous Wave (CW) Signal handelt. Beide Messsysteme sind beispielsweise in einem gemeinsamen Gehäuse untergebracht.

### Zusammenfassung der Erfindung

Es ist eine Aufgabe der Erfindung, eine alternative Bestimmung der Distanz zu einem Medium sowie einer Fließgeschwindigkeit des Mediums anzugeben.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein Messgerät, beispielsweise ein Füllstandmessgerät, zur Bestimmung einer Distanz zu einem Medium sowie einer Fließgeschwindigkeit des Mediums durch Auswertung eines von dem Messgerät abgestrahlten und von dem Medium reflektierten frequenzmodulierten Sendesignals. Das Messgerät weist ein FMCW-Modul zur Erzeugung eines frequenzmodulierten Sendesignals auf, welches eine steigende und eine fallende Frequenzrampe aufweist. Weiter ist eine Antennenanordnung vorgesehen, die dem Abstrahlen des Sendesignals in eine erste Richtung senkrecht zur Fließrichtung des Mediums dient. Darüber hinaus weist das Messgerät eine Prozessoreinheit zur Bestimmung der Distanz zum Medium sowie der Fließgeschwindigkeit des Mediums durch Auswertung des von dem Medium reflektierten und von der Antennenanordnung aufgenommenen Sendesignals auf.

Das FMCW-Sendesignal weist mindestens zwei Frequenzrampen auf, wobei die eine eine ansteigende und die andere eine abfallende Rampe ist. Bei der Auswertung des reflektierten Sendesignals führt dies zu einer positiven Verschiebung der gemessenen Distanz zu einem Reflektor bzw. (bei der anderen Frequenzrampe) zu einer negativen Verschiebung der Distanz. Es handelt sich somit um eine "dreieckförmige Modulation" des Sendesignals.

Gemäß einer Ausführungsform der Erfindung ist die Prozessoreinheit zur Bestimmung der Distanz zum Medium sowie der Fließgeschwindigkeit des Mediums innerhalb eines einzigen Messzyklus ausgeführt.

Es ist zu berücksichtigen, dass es in allen Ausführungsformen der Erfindung vorgesehen sein kann, dass das Sendesignal, unabhängig davon, ob es senkrecht zur Fließrichtung des Mediums und/oder schräg zur Fließrichtung des Mediums abgestrahlt wird, von demselben Signalerzeugungsmodul erzeugt wird. Insbesondere kann auch vorgesehen sein, dass die empfangenen, reflektierten Sendesignale von derselben Prozessoreinheit ausgewertet werden. Aus dem in die erste Richtung abgestrahlten Sendesignal kann nach dessen Reflexion an der Oberfläche des Füllmediums die Distanz bestimmt werden und aus dem in die zweite Richtung abgestrahlten Sendesignal die Fließgeschwindigkeit des Mediums.

Die Bestimmung der Fließgeschwindigkeit und der Distanz des Füllstandmessgeräts zum Medium kann durch eine einzelne Messung erfolgen, bei der das Sendesignal in die erste Richtung senkrecht zur Fließrichtung des Mediums und davor, danach oder gleichzeitig in die zweite Richtung schräg zur Fließrichtung des Mediums abgestrahlt wird.

De Abstrahlung des Sendesignals erfolgt demnach zunächst in zwei verschiedene Richtungen, gefolgt von einer Auswertung der entsprechenden, an der Oberfläche des Füllmediums reflektierten Signale, welche die Bestimmung der Fließgeschwindigkeit und der Distanz (Füllstand bzw. Pegel) ermöglicht.

Neben der gleichzeitigen Abstrahlung des Sendesignals in die zwei verschiedenen Richtungen ist es auch möglich, zunächst das Sendesignal in die erste Richtung abzustrahlen und daraufhin in die zweite Richtung (oder umgekehrt).

Die Bestimmung von Distanz und Fließgeschwindigkeit kann sequenziell oder parallel erfolgen, je nach Ausführungsform des Füllstandmessgeräts.

Auch kann vorgesehen sein, dass sich der Messzyklus wie folgt definiert: Die Distanz wird mehrmals gemessen, indem zeitlich aufeinanderfolgende Sendesignale in die erste Richtung abgestrahlt und die entsprechend reflektierten Signale ausgewertet werden. Die Auswertung des schräg zur Fließrichtung des Mediums abgestrahlten Sendesignals erfolgt jedoch weniger oft, beispielsweise nur nach jeder zehnten oder zwanzigsten Messung der Distanz. Dies kann bedeuten, dass das Sendesignal in die zweite Richtung auch nur dann abgestrahlt wird, wenn eine bestimmte Anzahl an Distanzmessungen erfolgt ist oder wenn eine bestimmte Zeit seit der letzten Fließgeschwindigkeitsbestimmung vergangen ist (beispielsweise eine Minute).

Es ist aber auch möglich, dass das Sendesignal öfter in die zweite Richtung abgestrahlt wird, das entsprechende reflektierte Signal, das aus dieser Richtung von der Antennenanordnung aufgenommen wird, jedoch nur dann auch ausgewertet wird (um die Fließgeschwindigkeit zu bestimmen), wenn eine bestimmte Anzahl von Füllstandmessungen erfolgt ist oder eine bestimmte Zeit seit der letzten Fließgeschwindigkeitsbestimmung vergangen ist (beispielsweise eine oder zwei Minuten).

Es kann demnach vorgesehen sein, dass die Bestimmung der Fließgeschwindigkeit durch ein bestimmtes Ereignis getriggert wird. Hierbei kann es sich, wie bereits beschrieben, um die Durchführung einer bestimmten Anzahl an Distanzmessungen und/oder den Ablauf einer bestimmten Zeit seit der letzten Fließgeschwindigkeitsbestimmung handeln. Alternativ oder zusätzlich kann es sich bei dem die Fließgeschwindigkeitsbestimmung auslösenden Ereignis aber auch darum handeln, dass sich der Pegelstand (also die "Distanz") während einer vorbestimmten Zeit um mehr als einen vorbestimmten Schwellwert geändert hat. In anderen Worten wird gemäß dieser Ausführungsform eine Fließgeschwindigkeitsmessung dann getriggert, wenn sich die Distanz schnell genug ändert.

Gemäß einer weiteren Ausführungsform der Erfindung ist die Antennenanordnung zum Abstrahlen des Sendesignals in die erste Richtung senkrecht zur Fließrichtung des Mediums und in eine zweite Richtung, die ungleich der ersten Richtung ist, ausgeführt.

Die Antennenanordnung kann eine einzelne Antenne mit zwei oder mehr Hauptabstrahlrichtungen aufweisen. Beispielsweise handelt es sich bei der Antennenanordnung um ein Array aus mehreren Planarantennen.

Auch kann die Antennenanordnung eine erste Antenne und eine zweite Antenne aufweisen, wobei die erste Antenne zum Abstrahlen des Sendesignals in die erste Richtung ausgeführt ist und wobei die zweite Antenne zum Abstrahlen des Sendesignals in die zweite Richtung ausgeführt ist.

Diese Antennen können gleichzeitig oder wechselweise betrieben werden. In anderen Worten wird im ersten Fall das Sendesignal gleichzeitig in beide Richtungen abgestrahlt, und im zweiten Fall, indem die Antennen wechselweise betrieben werden, wird zunächst das Sendesignal in die erste Richtung abgestrahlt und darauf in die zweite Richtung.

Das abgestrahlte Sendesignal wird zumindest teilweise an der Oberfläche des Mediums reflektiert und somit zumindest teilweise an die Antenne zurückgestrahlt, welche das reflektierte, zurückgestrahlte Sendesignal aufnimmt und einer Signalverarbeitungseinheit übergibt.

Gemäß einer weiteren Ausführungsform der Erfindung sind die beiden Antennen über einen einzelnen Richtkoppler, einen einzelnen Leistungssplitter oder einen Umschalter an das FMCW-Modul angeschlossen.

Richtkoppler, Leistungssplitter oder Umschalter können sich im HF-Signalpfad zwischen dem HF-Modul (FMCW-Modul) und der Antennenanordnung befinden.

Gemäß einer weiteren Ausführungsform der Erfindung ist die Prozessoreinheit zur Bestimmung der Fließgeschwindigkeit des Mediums durch Auswertung der Breite des von dem Medium reflektierten und von der Antennenanordnung aufgenommenen Sendesignals nach dessen Fouriertransformation in den Frequenzbereich ausgeführt.

Wird das Sendesignal lediglich senkrecht zur Fließrichtung des Mediums abgestrahlt, ergibt sich eine Verbreiterung des durch schnelle Fouriertransformation transformierten ZF-Signals, welche von der Fließgeschwindigkeit abhängig ist.

Gemäß einer weiteren Ausführungsform der Erfindung ist das Messgerät als Füllstandradar ausgeführt.

Auch kann vorgesehen sein, dass sich die Antennenanordnung gegenüber einem Gehäusebereich des Messgeräts, der zur Befestigung des Messgeräts an einen Träger vorgesehen ist, drehen lässt, so dass sich die Antennenanordnung optimal zur Fließrichtung des Gewässers ausrichten lässt, ohne dass hierfür das Messgerät selber ausgerichtet werden muss.

Insbesondere kann das Messgerät zum Anschluss an eine 4...20mA ZweidrahtLeitung ausgeführt sein, über welche es gleichzeitig mit Energie für den Messbetrieb beliefert wird und einen Messwert übertragen kann, der proportional zum fließenden Strom ist.

Gemäß einem weiteren Aspekt der Erfindung ist ein Verfahren zur Bestimmung einer Distanz zu einem Medium sowie einer Fließgeschwindigkeit des Mediums durch Auswertung eines von einem Messgerät abgestrahlten und von dem Medium reflektierten frequenzmodulierten Sendesignals angegeben. Zunächst wird ein frequenzmoduliertes Sendesignal erzeugt, welches eine steigende und eine fallende Frequenzrampe aufweist. Das Sendesignal wird dann in eine erste Richtung senkrecht zur Fließrichtung des Mediums abgestrahlt und die Distanz zum Medium sowie die Fließgeschwindigkeit des Mediums werden durch Auswerten des von dem Medium reflektierten und von der Antennenanordnung aufgenommenen Sendesignals bestimmt.

Grundsätzlich kann auch vorgesehen sein, dass das Sendesignal nicht senkrecht zur Fließrichtung des Mediums, sondern in einer Richtung schräg zur Fließrichtung des Mediums abgestrahlt wird. Kennt man den Abstrahlwinkel, ist auch in diesem Falle die Distanz zur Oberfläche des Mediums bestimmbar.

Gemäß einem weiteren Aspekt der Erfindung ist ein Programmelement angegeben, das, wenn es auf einer Prozessoreinheit eines Füllstandmessgeräts ausgeführt wird, das Füllstandmessgerät anleitet, die oben und im Folgenden beschriebenen Verfahrensschritte durchzuführen.

Gemäß einem weiteren Aspekt der Erfindung ist ein computerlesbares Medium angegeben, auf dem ein Programmelement gespeichert ist, das, wenn es auf einer Prozessoreinheit eines Füllstandmessgeräts ausgeführt wird, das Füllstandmessgerät anleitet, die oben und im Folgenden beschriebenen Verfahrensschritte durchzuführen.

Im Folgenden werden mit Verweis auf die Figuren Ausführungsbeispiele der Erfindung beschrieben.

### Kurze Beschreibung der Figuren

Fig. 1A zeigt ein Messgerät gemäß einem Ausführungsbeispiel der Erfindung.
Fig. 1B zeigt die Sendekeule eines Sendesignals gemäß einem Ausführungsbeispiel der Erfindung.
Fig. 2 zeigt ein Messgerät gemäß einem weiteren Ausführungsbeispiel der Erfindung.
Fig. 3 zeigt ein Messsignal und ein Empfangssignal.
Fig. 4 zeigt FFT-transformierte Signale am Empfängerausgang von Rampe 1 und Rampe 2.
Fig. 5 zeigt ein Messgerät gemäß einem Ausführungsbeispiel der Erfindung.
Fig. 6 zeigt ein weiteres FFT-transformiertes Signal am Empfängerausgang des Messgeräts.
Fig. 7 zeigt ein weiteres FFT-transformiertes Signal am Empfängerausgang eines Messgeräts.
Fig. 8 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung gleiche Bezugszeichen verwendet, so bezeichnen diese gleiche oder ähnliche Elemente. Gleiche oder ähnliche Elemente können aber auch durch unterschiedliche Bezugszeichen bezeichnet sein.

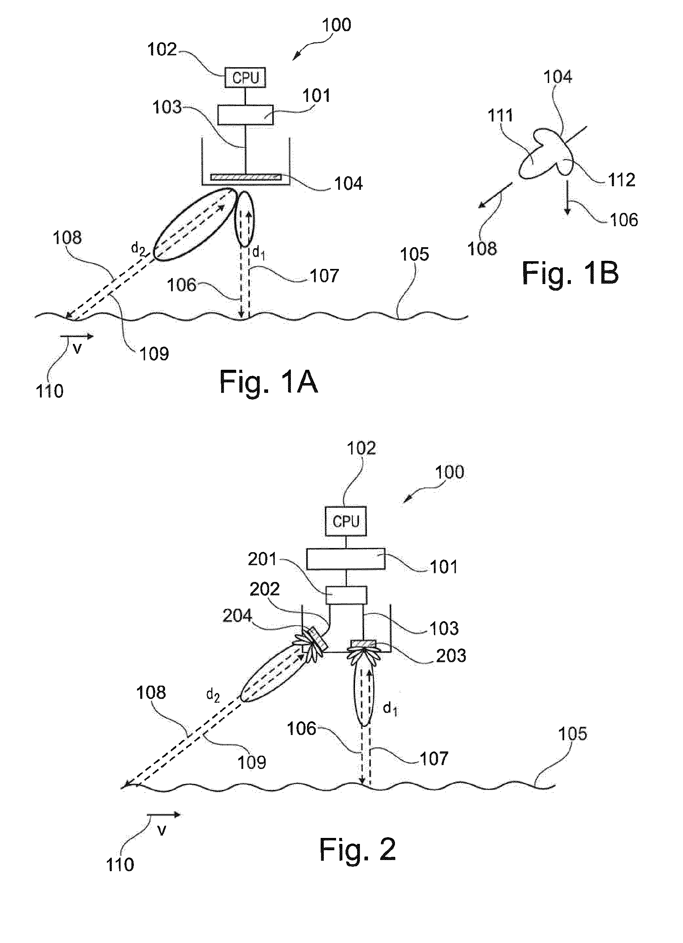

Fig. 1A zeigt ein Messgerät 100 gemäß einem Ausführungsbeispiel der Erfindung. Das Messgerät weist eine Prozessoreinheit 102 auf, die an ein FMCW-Modul 101 angeschlossen ist. Vom FMCW-Modul 101 führt eine Signalleitung 103 zu einer Antennenanordnung 104, bei der es sich beispielsweise um eine planare Antenne, beispielsweise in Form eines Antennenarrays, handelt.

Die Antennenanordnung 104 strahlt das Sendesignal in eine Richtung 106 senkrecht zur Fließrichtung 110 des Mediums 105 ab. Das Signal wird an der Oberfläche des Mediums 105 zumindest teilweise reflektiert und in umgekehrter Richtung 107 an die Antennenanordnung 104 zurückgeschickt.

Die Antennenanordnung 104 strahlt das Sendesignal aber auch in einer Richtung 108 ab, die ungleich der Richtung 106 ist und beispielsweise einen Winkel α zur Fließrichtung 110 aufweist, der zwischen 0 Grad und 90 Grad, beispielsweise zwischen 30 Grad und 60 Grad, liegt und beispielsweise in etwa 45 Grad aufweist. Das in Richtung 108 abgestrahlte Sendesignal wird ebenfalls zumindest teilweise an der Oberfläche des Mediums 105 reflektiert und in entgegengesetzter Richtung 109 wieder an die Antennenanordnung 104 zurückgeworfen.

Fig. 1B zeigt die Intensitätsverteilung des von der Antennenanordnung abgestrahlten Sendesignals in Abhängigkeit von der Abstrahlrichtung gemäß einem Ausführungsbeispiel der Erfindung. Das Sendesignal wird von der Antennenanordnung 104 abgestrahlt und weist eine Hauptrichtung 108 auf, wie dies durch die Hauptkeule 111 symbolisiert ist. Weiter sind zwei Nebenkeulen 112 vorgesehen, wobei die eine davon in Richtung 106 abstrahlt.

Erfindungsgemäß können die Distanz zwischen dem Sensor 100 und der Oberfläche des Mediums (also der Füllstand) sowie die Fließgeschwindigkeit und ggf. auch die Fließrichtung des Mediums bestimmt werden. Auch kann die Berechnung der Durchflussmenge des Mediums bei bekannter Gerinne-Form unter Kenntnis der Abmessungen des Fließbettes erfolgen.

Das Messgerät kann beispielsweise ein FMCW-Radarsensor sein, der ein HF-Modul 101 und eine oder zwei Antennen aufweist. Aus dem vorliegenden Sendesignal, das nach dessen Reflexion an der Oberfläche des Mediums (ein Fluid) von der Antennenanordnung aufgenommen wird, können die Distanz des Sensors zum Medium und dessen Fließgeschwindigkeit bzw. Fließrichtung bestimmt werden.

Die Auswertung der Distanz und der Fließgeschwindigkeit durch den FMCW-Sensor erfolgt unter Verwendung einer steigenden und einer fallenden Frequenzrampe und durch Auswertung des Dopplereffekts, welcher durch die Fließbewegung des Mediums hervorgerufen wird. Zur Messung des Dopplereffekts kann es von Vorteil sein, wenn die Oberfläche des Mediums eine Kräuselung oder Wellenbildung aufweist.

Das Messgerät kann als Zweileitersensor (z. B. 4...20mA Loop Powered) ausgeführt sein. Pegelstände und Fließgeschwindigkeiten sowie Fließrichtungen von Gewässern können somit auf einfache Weise effektiv gemessen werden.

Ein Kerngedanke der Erfindung kann darin gesehen werden, dass die Distanz zu der Oberfläche eines Mediums und gleichzeitig die Fließgeschwindigkeit und -richtung des Mediums mit einem FMCW-Radar-Sensor bestimmt werden können. Zusätzlich kann bei bekannter Gerinne-Form die Durchflussmenge berechnet werden.

Fig. 2 zeigt ein Ausführungsbeispiel eines Messgeräts 100, welches im Gegensatz zum Messgerät der Fig. 1 zwei Antennen 203, 204 aufweist. Die erste Antenne 203 strahlt das Sendesignal in Richtung 106 senkrecht zur Fließrichtung 110 des Mediums 105 ab und ist über die Signalleitung 103 und einen Richtkoppler, Umschalter oder Leistungssplitter 201 mit dem FMCW-Modul 101 verbunden. Die zweite Antenne 204 weist einen Winkel α zur ersten Antenne auf, so dass das Sendesignal in Richtung 108 abgestrahlt wird. Die zweite Antenne 204 ist über die Signalleitung 202 mit dem Richtkoppler, Leistungssplitter oder Umschalter 201 und über diesen mit dem FMCW-Modul 101 verbunden.

Wird ein FMCW-Modul mit zwei Antennen oder einer Antenne mit zwei unterschiedlichen Hauptabstrahlrichtungen verwendet, kann die Auswertung der Distanz zum Medium und dessen Fließgeschwindigkeit in einem Messzyklus erfolgen.

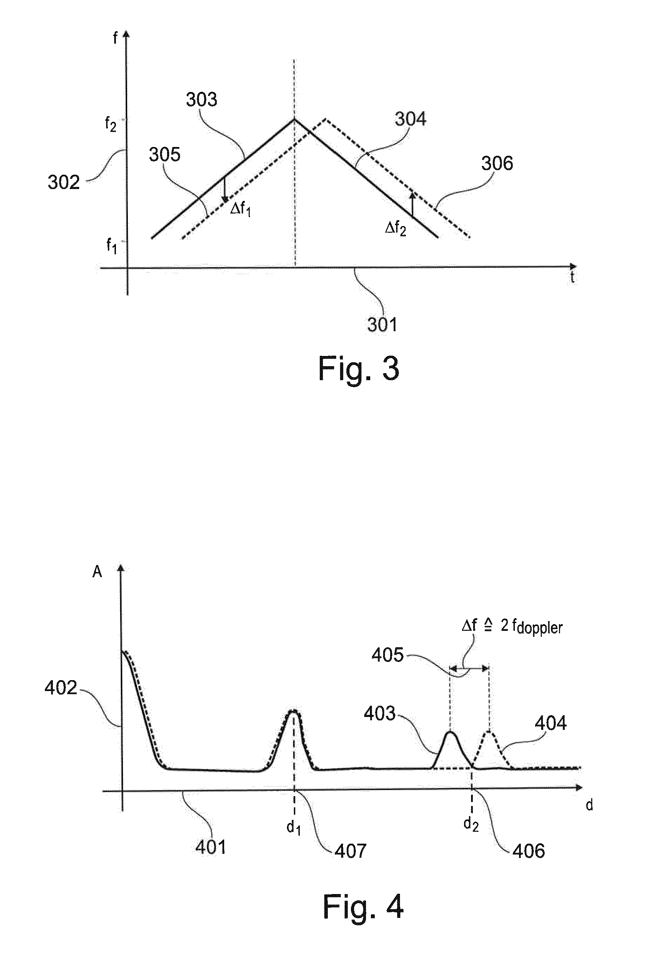

Zur Bestimmung der Distanz und der Fließgeschwindigkeit bzw. der Fließrichtung müssen zwei Frequenzrampen nach allgemeinen bekannten FMCW-Radarverfahren durchfahren werden. Die erste Rampe 303 ist beispielsweise in der Frequenz steigend, startet mit der Frequenz f1 und endet bei der Frequenz f2. Anschließend startet die fallende, zweite Rampe 304 bei f2 und endet bei der Frequenz f1 (vgl. Fig. 3). Die horizontale Achse 301 bildet die Zeit t ab, die vertikale Achse 302 die Frequenz f des Sendesignals.

Die zu dieser Kurve nach rechts verschobene Kurve 305, 306 gibt das von der Antennenanordnung empfangene Empfangssignal (also das von der Oberfläche des Mediums reflektierte Sendesignal) wieder.

Aus den beiden Rampen werden jeweils die dabei erzeugten Signale mittels eines Analog-Digital-Wandlers abgetastet und in einem Mikroprozessor mittels einer schnellen Fourier-Transformation (FFT) in den Frequenzbereich transformiert.

Daraus ergeben sich zwei Spektren, die in der Fig. 4 dargestellt sind.

Die horizontale Achse 401 bezeichnet hierbei die Distanz d zwischen dem Sensor und dem entsprechenden Reflektor und die vertikale Achse 402 bezeichnet die Amplitude des Empfangssignals.

Das erste Echo 407,welches der kürzesten Entfernung zwischen Sensor und Oberfläche des Mediums entspricht, gibt die Distanz d1 zum Medium an, aus dem weiter entfernten Echo 406 können die Geschwindigkeit des Mediums und dessen Fließrichtung ermittelt werden.

Die Reflexion aus der Distanzmessung ergibt bei beiden Rampen die gleiche Differenzfrequenz aus gesendetem und empfangenem Signal.

Die Reflexion aus dem schräg auftreffenden Signal, das in Richtung 108 abgestrahlt wurde (vgl. Fig. 1 und 2) wird zur Bestimmung der Fließgeschwindigkeit verwendet und wird durch den Dopplereffekt in der Frequenz um f_{Doppler} verschoben. Dadurch ergeben sich bei steigender bzw. fallender Rampe unterschiedliche Differenzfrequenzen. Diese unterscheiden sich um 2 x f_{Doppler}, wie dies an den Peaks 403, 404 zu erkennen ist. Der eine Peak 403, der in Bezug auf die tatsächliche Distanz d₂ nach links verschoben ist, ergibt sich aus dem Empfangssignal der ansteigenden Frequenzrampe 303 (vgl. Fig. 3) und das nach rechts verschobene Peaksignal 404 ergibt sich aus dem Empfangssignal der fallenden Frequenzrampe 306.

Der Pfeil 405 symbolisiert den Frequenzunterschied Δf zwischen den beiden Peaks, bei der es sich um die zweifache Dopplerverschiebung handelt.

Die ansteigenden und die abfallenden Flanken der dreieckförmigen Modulation haben eine unterschiedliche Richtung der Dopplerverschiebung. Eine Signalverarbeitung erfolgt beispielsweise erst nach einer kleinen Pause nach den Wendepunkten der gesendeten Frequenzmodulation. Es handelt sich um eine sog. dreieckförmige Modulation. Die Verwendung einer dreieckförmigen Modulationsform bietet die Möglichkeit, die Dopplerfrequenz als Maß für eine Radialgeschwindigkeit als unabhängige Messgröße neben der Entfernungsmessung zu ermitteln. Während der Annäherung erhöht sich die Empfangsfrequenz und verringert so während der steigenden Flanke den Betrag der Differenzfrequenz. Durch die Überlagerung mit der Dopplerfrequenz ist die Frequenzdifferenz bei Messung einer Annäherung in der ansteigenden Flanke der dreieckförmigen Modulation geringer. In der fallenden Flanke ist sie um den gleichen Betrag höher als bei einem statischen Reflektor.

Bei entgegengesetzter Fließrichtung (also vom Sensor entfernend) reduziert sich die Empfangsfrequenz und erhöht damit während der steigenden Frequenzrampe die Differenzfrequenz. Äquivalent hierzu verringert sich die Differenzfrequenz in der fallenden Rampe. Bei betragsmäßig gleicher Steilheit der Frequenzänderung in steigender und fallender Flanke des Dreiecksignals ist ein Mittelwert der Differenzfrequenz aus beiden Messperioden ein Entfernungsmaß, unabhängig von der Geschwindigkeit. Die Summe der Differenzfrequenz ist ein Maß für die halbe Radialgeschwindigkeit des Objekts.

Durch Auswertung der Richtung der Frequenzverschiebung bei steigender bzw. fallender Frequenzrampe lässt sich zudem die Fließrichtung bestimmen.

An die Linearität der Frequenzänderung werden im Regelfall hohe Anforderungen gestellt.

Falls sich in dem Bereich hinter dem Echo 407 für die Distanzmessung außer den Echos für die Fließgeschwindigkeitsmessung weitere Echos befinden, z.B. durch Störreflexionen von Objekten oder Vielfache der Medienoberfläche, dann kann der erwartete Entfernungsbereich für die Ermittlung der Fließgeschwindigkeit aus dem bekannten Winkel α zwischen den beiden Antennenabstrahlrichtungen 106, 108 und der Distanz des Messgeräts zum Medium berechnet werden.

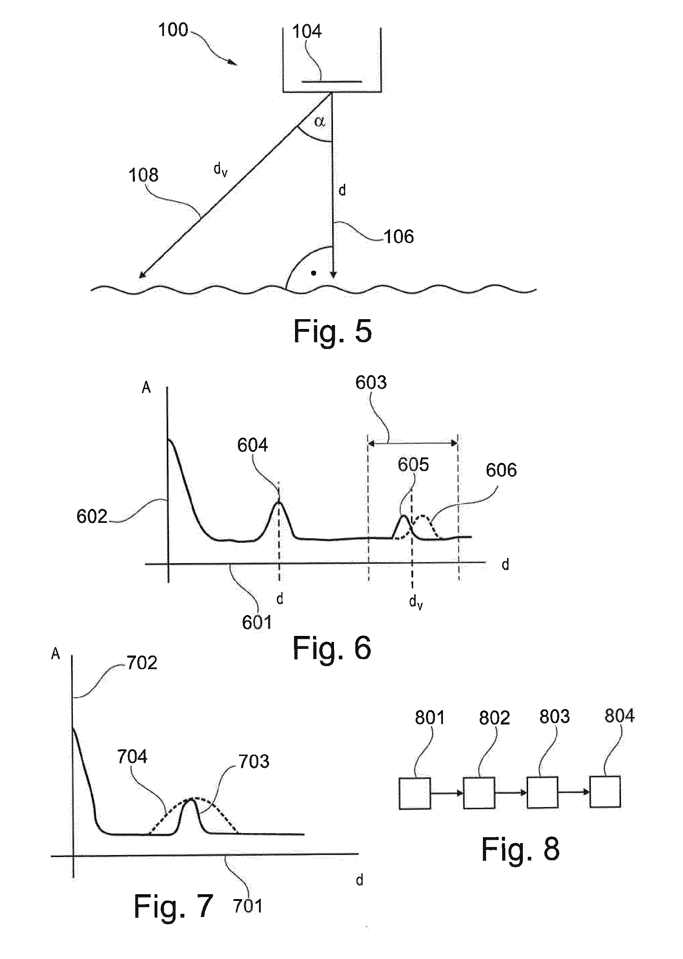

Der Bereich oberhalb und unterhalb dieser Entfernung kann als Messfenster 603 festgelegt werden, in dem die Auswertung der beiden Echos aus steigender und fallender Frequenzrampe erfolgt. Somit kann eine höhere Messsicherheit bei der Bestimmung der Fließgeschwindigkeit erreicht werden (vgl. Fig. 5 und 6).

In der Fig. 6 ist wie auch schon in der Fig. 4 die Distanz bzw. Entfernung d 601 gegen die Amplitude 602 des Empfangssignals (reflektiertes Sendesignal) aufgetragen, nachdem dieses einer Fourier-Transformation unterzogen wurde. Auch hier sind der Hauptpeak 604, welcher der Distanz zwischen Sensor und der Oberfläche des Mediums entspricht, sowie die beiden Peaks 605, 606 zu erkennen, welche auf das schräg abgestrahlte Sendesignal zurückzuführen sind. Diese beiden Peaks liegen innerhalb des Messfensters 603.

Die Fließgeschwindigkeit des Mediums kann aber auch auf andere Weise bestimmt werden: Insbesondere bei der Verwendung von nur einer Antenne mit einer einzigen Hauptabstrahlrichtung kann die Fließgeschwindigkeit auch direkt im reflektierten Signal gemessen werden. Hierbei wird nur das Echo bei der Distanz d zur Oberfläche des Mediums betrachtet.

Da eine Antenne auch immer Anteile außerhalb der Hauptabstrahlrichtung absendet und empfängt und der Sensor damit auch schräg zur Oberfläche des Mediums misst, liegen an einem Empfänger des FMCW-Radarmoduls auch immer Signale an, die mit der Dopplerfrequenz durch die Bewegung des Mediums behaftet sind.

Dies führt dazu, dass das durch FFT-transformierte ZF-Signal (Zwischenfrequenzsignal), einer von der Fließgeschwindigkeit abhängige Verbreiterung aufweist, wie dies durch die Peaks 703 und 704 der Fig. 7 angedeutet ist. Wie auch in den Fig. 4 und 6 bezeichnet die horizontale Achse 701 die Entfernung und die vertikale Achse 702 die Amplitude. Der schmälere Peak 703 entspricht einer geringeren Fließgeschwindigkeit des Mediums und der breitere Peak 704 entspricht einer hohen Fließgeschwindigkeit des Mediums.

Aus dieser Verbreiterung kann die Fließgeschwindigkeit bestimmt werden. Eine geringe Verbreiterung bedeutet geringe Geschwindigkeit, eine große Verbreitung bedeutet hohe Geschwindigkeit.

Das Messgerät kann eine entsprechende Eichung aufweisen, so dass die Fließgeschwindigkeit über die Messung der Verbreiterung hinreichend genau bestimmt werden kann.

Bei Verwendung von zwei Antennen, wie dies in der Fig. 2 dargestellt ist, kann mit der Antenne 204 nach dem zuvor genannten Verfahren die Fließgeschwindigkeit und ggf. auch die Fließrichtung bestimmt werden. In einem zweiten Messdurchlauf, ebenfalls mit dem FMCW-Verfahren, kann mittels der Antenne 203 der Füllstand bestimmt werden.

Beide Werte können dann von dem Messgerät ausgegeben werden bzw. zur Berechnung der Durchflussmenge verwendet werden.

Fig. 8 zeigt ein Flussdiagramm eines Verfahrens gemäß einem Ausführungsbeispiel der Erfindung.

In Schritt 801 wird ein frequenzmoduliertes Sendesignal erzeugt, welches eine steigende und eine fallende Frequenzrampe aufweist. Zur Erhöhung der Genauigkeit können mehrere solche Frequenzrampen aneinander gereiht vorgesehen sein.

In Schritt 802 wird das Sendesignal zumindest in eine erste Richtung senkrecht zur Fließrichtung des Mediums oder in eine andere Richtung abgestrahlt. In Schritt 803 wird dann das an der Oberfläche des Mediums reflektierte Sendesignal durch die Antennenanordnung erfasst und in Schritt 804 bestimmt eine Prozessoreinheit die Distanz des Sensors zum Medium sowie dessen Fließgeschwindigkeit durch Auswertung des von dem Medium reflektierten und von der Antennenanordnung aufgenommenen Sendesignals.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (100) zur Bestimmung einer Distanz zu einem Medium sowie einer Fließgeschwindigkeit des Mediums durch Auswertung eines von dem Füllstandmessgerät abgestrahlten und von dem Medium reflektierten frequenzmodulierten Sendesignals, das Füllstandmessgerät aufweisend:
ein FMCW-Modul (101) zur Erzeugung eines frequenzmodulierten Sendesignals, welches eine steigende und eine fallende Frequenzrampe aufweist;
eine Antennenanordnung (203, 204) zum Abstrahlen des Sendesignals in eine erste Richtung (106) senkrecht zur Fließrichtung (110) des Mediums;
eine Prozessoreinheit (102) zur Bestimmung der Distanz zum Medium sowie der Fließgeschwindigkeit des Mediums durch Auswertung des von dem Medium reflektierten und von der Antennenanordnung aufgenommenen Sendesignals.

2. Füllstandmessgerät nach Anspruch 1,
wobei die Prozessoreinheit (102) zur Bestimmung der Distanz zum Medium sowie der Fließgeschwindigkeit des Mediums innerhalb eines einzigen Messzyklus ausgeführt ist.

3. Füllstandmessgerät nach Anspruch 1 oder 2,
ausgeführt zur zusätzlichen Bestimmung der Fließrichtung des Mediums.

4. Füllstandmessgerät nach Anspruch 1 oder 2,
ausgeführt zur zusätzlichen Bestimmung der Durchflussmenge des Mediums.

5. Füllstandmessgerät nach einem der vorhergehenden Ansprüche,
wobei die Antennenanordnung (203, 204) zum Abstrahlen des Sendesignals in die erste Richtung (106) senkrecht zur Fließrichtung (110) des Mediums und in eine zweite Richtung (108), die ungleich der ersten Richtung ist, ausgeführt ist.

6. Füllstandmessgerät nach Anspruch 5,
wobei die Antennenanordnung (203, 204) eine einzelne Antenne mit zwei oder mehr Hauptabstrahlrichtungen ist.

7. Füllstandmessgerät nach einem der vorhergehenden Ansprüche,
wobei die Antennenanordnung ein planares Antennenaray aufweist.

8. Füllstandmessgerät nach Anspruch 5,
wobei die Antennenanordnung (203, 204) eine erste Antenne (203) und eine zweite Antenne (204) aufweist;
wobei die erste Antenne (203) zum Abstrahlen des Sendesignals in die erste Richtung (106) und die zweite Antenne (204) zum Abstrahlen des Sendesignals in die zweite Richtung (108) ausgeführt ist.

9. Füllstandmessgerät nach Anspruch 8,
wobei die zwei Antennen (203, 204) beide über einen Richtkoppler (201) oder einen Leistungssplitter (201) an das FMCW-Modul angeschlossen sind.

10. Füllstandmessgerät nach einem der vorhergehenden Ansprüche,
Prozessoreinheit (102) zur Bestimmung der Fließgeschwindigkeit des Mediums durch Auswertung der Breite des von dem Medium reflektierten und von der Antennenanordnung aufgenommenen Sendesignals nach dessen Fouriertransformation in den Frequenzbereich.

11. Füllstandmessgerät nach einem der vorhergehenden Ansprüche,
ausgeführt als Füllstandradar.

12. Füllstandmessgerät nach einem der vorhergehenden Ansprüche,
ausgeführt als 2-Leiter Sensor.

13. Verfahren zur Bestimmung einer Distanz zu einem Medium sowie einer Fließgeschwindigkeit des Mediums durch Auswertung eines von einem Füllstandmessgerät abgestrahlten und von dem Medium reflektierten frequenzmodulierten Sendesignals, das Verfahren aufweisend die folgenden Schritte:
Erzeugen eines frequenzmodulierten Sendesignals, welches eine steigende und eine fallende Frequenzrampe aufweist;
Abstrahlen des Sendesignals in eine erste Richtung (106) senkrecht zur Fließrichtung (110) des Mediums;
Bestimmen der Distanz zum Medium sowie der Fließgeschwindigkeit des Mediums durch Auswerten des von dem Medium reflektierten und von der Antennenanordnung aufgenommenen Sendesignals.

14. Programmelement, das, wenn es auf einer Prozessoreinheit (102) eines Füllstandmessgeräts ausgeführt wird, das Füllstandmessgerät anleitet, die Schritte nach Anspruch 13 auszuführen.

15. Computerlesbares Medium, auf dem ein Programmelement gespeichert ist, das, wenn es auf einer Prozessoreinheit (102) eines Füllstandmessgeräts ausgeführt wird, das Füllstandmessgerät anleitet, die Schritte nach Anspruch 13 auszuführen.
